# EUROPEAN PATENT SPECIFICATION

(11) **EP 2 913 974 B1**
(45) Date of publication and mention of the grant of the patent: **01.04.2020**
(21) Application number: 14290051.3
(22) Date of filing: 26.02.2014
(51) Int. Cl.: H04L 29/06

(54) **Method for providing communication**
Verfahren zur Bereitstellung von Kommunikation
Procédé d'établissement de communication

(43) Date of publication of application: 02.09.2015
(73) Proprietor: Alcatel Lucent, 91620 Nozay (FR)
(72) Inventor: Templ, Wolfgang, 70435 Stuttgart (DE); Kopp, Dieter, 70435 Stuttgart (DE)
(74) Representative: Louis Pöhlau Lohrentz

(56) References cited:
- WO-A1-2010/138109
- COATES G M ET AL: "Collaborative, Trust-Based Security Mechanisms for a Regional Utility Intranet", IEEE TRANSACTIONS ON POWER SYSTEMS, IEEE SERVICE CENTER, PISCATAWAY, NJ, US, vol. 23, no. 3, 31 August 2008 (2008-08-31), pages 831-844, XP011228231, ISSN: 0885-8950, DOI: 10.1109/TPWRS.2008.926456

## Description

### Field of the Invention

The present invention is situated in the field of communication and deals with a method and apparatus for providing communication in a communications network.

### Background

In communications networks there are totally different communication performance and security requirements. However, a secure communication is important for the functioning of components of the communications network. In particular, a fraud message like a wrong control command can generate a disaster. Therefore, there exists a need to provide and improve communication, in particular secure communication, between components of the communications network.

COATES G M ET AL: "Collaborative, Trust-Based Security Mechanisms for a Regional Utility Intranet", vol. 23, no. 3, 31 August 2008, pages 831-844, XP011228231 discloses a mechanism providing verification of communication messages between components of a communications network.

### Summary

The objective of the invention is achieved by subject-matter as disclosed by the appended claims.

The components of the communications network may be implemented in hardware, software or combination thereof.

Further advantages and features of the invention are described in preferred embodiments. Features of preferred embodiments may be combined to implement further preferred embodiments. Thus, the preferred embodiments are not meant to be exclusive, but to be combinable. The scope of the invention is not limited by the description of embodiments, but defined by the claims.

In a preferred embodiment, the network component and relation diagram is provided by a centralized trust centre or by local trust centres, in particular the local trust centres in connection with each other. A trust centre is preferably provided with information about the components of the communications network, the functions of and relations between the components.

In a preferred embodiment, the network component and relation diagram is updated, if a component of the communications network is newly integrated into the communications network, and if a component of the communications network is eliminated out of the communications network.

In a preferred embodiment, the one or more identification parameters comprise one or more parameters selected from the group: a source ID, in particular indicating a second component of the communication network as a sender of the message, a destination ID and a message type ID. A type of a message might be a command message, a control message, an information message, in particular for providing information, for retrieving information, e.g. status information.

In a preferred embodiment, the verifying of the validity of the message comprises determining the validity of the second component as the sender of the message based on the source ID of the message, in particular by accessing information of the network component and function diagram, determining the validity of the first component as a receiver of the message based on the destination ID of the message, in particular by accessing information of the network component and function diagram, determining the message type of the message based on the message type ID of the message, in particular by accessing information of the network component and function diagram, and determining, if the second component is authorized to sent a message of the indicated message type to the first component as the receiver of the message, in particular by accessing information of the network component and function diagram.

In a preferred embodiment, a component which becomes part of the communications network is certified by a certificate which comprises in particular the unique component ID of the component. Preferably, the certificate expires after a predetermined lifetime. If, before or upon expiry of the lifetime of the certificate, the certificate is re-activated, the lifetime is prolonged for a next predetermined period. Preferably, the network component and function diagram comprises the certificates of the components.

In a preferred embodiment, the unique component ID is derived from the hardware information of the component, in particular the MAC address.

In a preferred embodiment, the unique component ID is redefined in predetermined time intervals. In a preferred embodiment, the component ID is redefined regularly. In a preferred embodiment, the component ID is redefined irregularly, e.g. on occasion of an event, for example if a security problem occurred or is suspected, for example a man-in-the-middle attack, which is an attack of a person aiming to invade into the communications network in order to implement fraud messages.

In a preferred embodiment, the unique component ID is derived from one or more characteristics of the component. Each component usually has a characteristic performance values, e.g. peaks in the voltage and/or current curve of the energy consumption and/or performance diagram. The one or more characteristics of the component might in preferred embodiments be specified as characteristic patterns. In preferred embodiments, characteristics or characteristic values might be a time distance or time detail or time period between voltage peaks, frequency values or frequency components, i.e. frequency based parameter values or parameters, or rise, increase or decrease or variance of a time based characteristic, i.e. a characteristic measured over time. In preferred embodiments, a combination of characteristics might be applied for generating and/ or processing the unique component ID. By these values, the component might be characterised. Preferably, an identification of the component can be processed out of these characteristics, i.e. characterizing values, of the component.

In a preferred embodiment, after verifying the validity of the message, the message is further processed. If the message is valid, one or more instructions comprised by the message are executed, If the message is not valid, the message is discarded.

In a preferred embodiment, the components of the communications network are associated with components of a production area, manufacturing area and/or chemical area. In a preferred embodiment, the components of the communications network are integrated within components of a production area, manufacturing area and/or chemical area. In a preferred embodiment, the communications network is implemented within for example a production area, e.g., car production. The production area might be implemented within a distinct geographical area, e.g., within a limited ground or field, or might be spanned over several grounds situated in different sites, e.g., in different cities or even countries. The components of the production area might be a fabric, control computer, a storage hall or components within the fabric, for example a manufacturing robot. To provide and enable communication between these components of the production area, e.g., control commands in messages, a communications network according to the described method is implemented within this production area. Preferable, each component of the production is provided by a component of the communication network. Preferable, a component of the communication network is implemented in a component of the production are. Preferable, each component of the production area comprises a component of the communications network. Preferable, each component of the production area is provided by means of communication within the component so that each component of the production area is a component of the communications network. What has been described in the context of a production area, applies likewise for a manufacturing area or chemical area.

In a preferred embodiment, the manufacturing, production or chemical area is hierarchically structured in a plurality of planes, e.g. product design and development plane, production planning plane, production engineering plane, production plane and services plane, wherein to each plane a respective communication level comprising respective components of the communications network is associated. Preferably, to each communication level a respective security level is associated, wherein each of the respective security levels is defined by rules specifying which component of the communications network is authorized to send and/or receive which type of message to which component of the communications level. Preferably, determining the validity of a message comprises checking one or more of these rules at the step of determining of a message received by a first component of the communications network. For example, a rule might indicate that a component of or associated with the production planning plane is not authorized to send any message to a component of the services plane so that a message sent from a component of the production planning plane to a component of the services plane is determined to be un-valid, in this case irrespective of the type of message. In other example, a rule indicates that a component of the services plane is authorized to send only messages of the message type information to a component of the development plane, so that a information message in this case might be valid, and a message of any other message, e.g. control command, would be determined as un-valid. Preferably, the rules are stored in the network component and function diagram.

In a preferred embodiment, the communication network is based on IP, Internet Protocol.

### Brief description of the figures

In the following detailed description, a more illustrative view of embodiments is provided with reference to the figures, where
- Fig. 1: depicts a schematic overview of components of a communications network
- Fig. 2: depicts a schematic view of components and steps of a method for providing communication in a communications network

### Detailed description

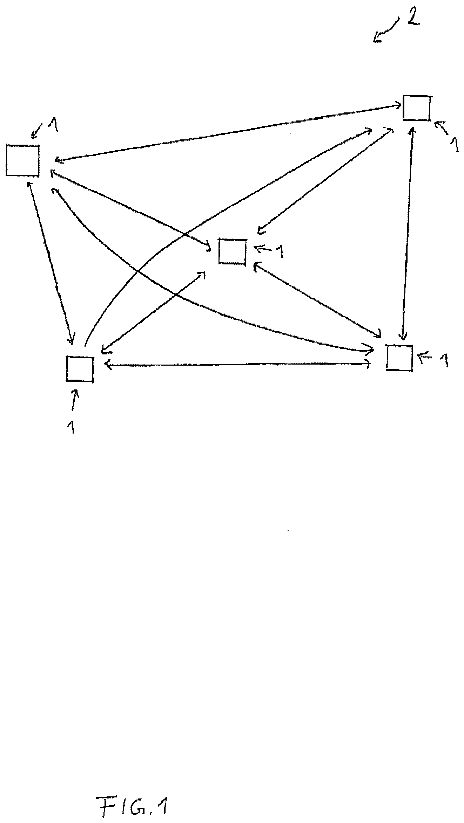

Fig. 1 depicts an overview of components 1 of a communications network 2. The components 1 of the communication network 2 are for exemplary reasons integrated into components of a production area. Thus the components 1 depicted on figure 1 symbolize likewise the components of a production area and the components 1 of an underlying communications network which is the communications network 2. The production area might be a production area for manufacturing of cars. The components of the production area might be a fabric, components within a fabric, for example a robot, a storage hall, a control centre, a design centre comprising e.g. engineering departments or units of the design centre, a facility of a retailer or supplier of parts for producing the products e.g. cars, wherein usually hundreds of cars might be produced every day. Usually, the components of the production area might be a plurality of dozens or hundreds or even thousands of components, as each e.g. robot or machine of a fabric of the production area might be implemented as component of the production area and component 1 of the underlying or associated communications network 2. Thus, in the later example, each robot of the production area might be implemented with or as a component 1 of the communications area 2. The components of the production area and thus the associated components 1 of the communications network 2 might be spanned over several countries, villages or sites. For example, a fabric might be situated in a village different from the village where a storage plant is situated. A control command component is for example situated within the same fabric, but in a different area as a robot within the fabric, where the robot is controlled by the control command component as in both the robot and in the control command component a respective component 1 of the underlying communications network 2 is associated with or integrated within. In particular, a component 1 of the communications network 2 might be comprised by the respective component of the production area, e.g. a robot might include a component 1 of the communications network by means of a computer or processor configured and adapted to provide communication within the communications network 2. The communication between the components of the production area and thus between the respective components 1 of the communications network 2 might be based on IP, i.e. Internet Protocol. In the following example, an implementation is described where the components of the production are comprise the respective components 1 of the communications network 2 and therefore are implemented within the same housing. Therefore, the term component, e.g. component(s) 1, first component 1a, second component 1b, addresses the component 1, 1a, 1b, respectively, of the communications network 2 and simultaneously the respective component of the production area. Further, according to the implementation the feature component 1 is further specified as component 1a, 1b. This means, component 1a and component 1b are part of the components 1 so that the feature components 1 also comprise the component 1a and 1b unless further specified and derivable from the context.

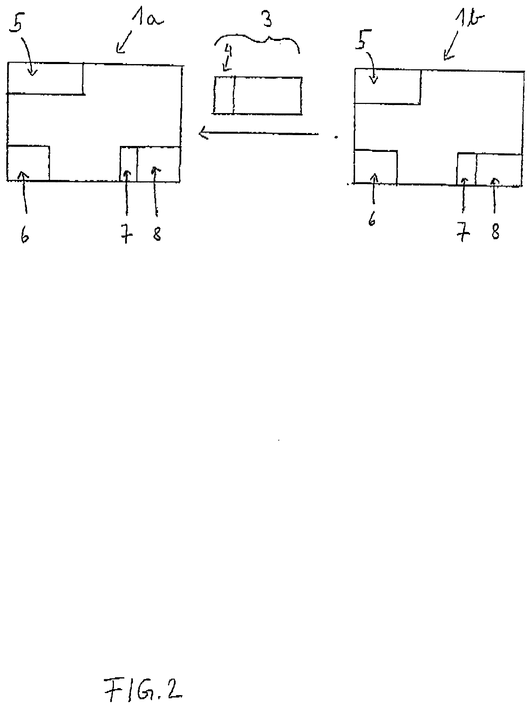

Figure 2 depicts a part of the communications network 2 in more detail, namely a first component 1a of the communications network 2 and a second component 1 b of the communications network 2 and a message 3 sent from the second component 1b to the first component 1a. The first component 1a receives the message 3. The message 3 comprises one or more identification parameters 4. After reception of the message 3, the first component 1a verifies, if the message 3 is valid. The verification of the validity of the message is processed based on the one or more identification parameters 4 of the message 3. The first component 1 a determines, in particular by means of a validation unit 8, the validity of the message 3 based on a comparison between information derived out of a network component and relation diagram 5 and one or more of the identification parameters 4 of the received message 3, wherein the network component and relation diagram 5 comprises components 1 of the communications network 2, functions of these components 1 of the communications network 2 and relations between these components 1 of the communications network 2.

In this example, the message 3 comprises three identification parameters 4, namely a source ID, a destination ID and a message type ID. Therefore, the first component 1a uses all three identification parameters for verifying the validity of the message 3. The source ID is the identification parameter 4 which identifies the sender of the message 3, Preferably, only components 1 of the communications network 2, and not components from outside of the communications network 2, are authorized to send messages 3 to other components 1 of the communications network 2. Typically, therefore the source ID identifies a component 1 different from the first component 1 a of the communications network as the sender of the message 3. The first component 1a verifies, if the source ID indicates or identifies a component 1 of the communications network 2 as sender of the message 3. The first component 1a reads the source ID of the message and checks if the source ID is the ID 6 of a component 1 of the communications network 2. Here, the first component 1a determines that the source ID of the message 3 is the ID 6 of component 1b and thus of a component 1 of the communications network 2. If however, in another example, the first component 1a determines that the source ID of the message 3 does not belong to a component 1 of the communications network 2, the first component 1a determines that the message 3 cannot be valid, because already the sender of the message 3 which as determined is not a component 1 of the communications network 2 is not authorized to send the message 3. In this latter case, the message 3 might be sent by an intruder into the communications network 2 who aimed to sent fraud messages, e.g. a wrong control command etc. within the communications network 2 (a so-called man-in-the-middle attack).

For determining the validity of the second component 1b as the sender of the message 3 based on the source ID of the message 3, the first component 1a must be able to retrieve information about the IDs 6 of the components 1 of the communications network 2. Preferably, the information about the IDs 6 of the components 1 of the communications network is stored in a network component and function diagram 5. The network component and function diagram 5 might be a table or list or any suitable file, where the components 1 of the communications network 2 are listed. In preferred embodiments, the information is stored at the first component 1a of the communications network 2.

In this example, the first component 1a retrieves the information from a network component and functions diagram 5. Here, the information is stored in a network component and functions diagram 5. The network component and function diagram 5 might be implemented as a data base, accessible by the first component 1b. The data base comprising the network component and function diagram 5 might be comprised by the first component 1a or adjacent to the first component 1a. The network component and function diagram 5 might be a centralized data base for all components 1 of the communications network 2 or divided into several data bases decentralized and accessible for one or more of the components 1 of the communications network 2. In either case, each component 1 of the communications network has access to information about the IDs 6 of the components 1 of the communications network 2 and thus is able to determine if the source ID of a message 3 belongs to a component 1 of the communications network 2. Preferably, all components 1 have a unique component ID 6. In preferred embodiments, the unique component ID 6 is derived from the hardware information of the component 1, in particular the MAC address, in preferred embodiments the unique component ID is derived from the hardware information of the component 1 in combination with other characteristic parameters, e.g. performance values and/or characteristic patterns, voltage curve etc. as described in detail above. In preferred embodiments, the component ID 6 is encrypted and processed by an encoding algorithm out of the MAD address. Preferably, the encoding algorithm is accessible only by a PIN, personal identification code, for encoding or changing the component ID 6. In preferred embodiments, the unique component ID 6 is redefined in predetermined time intervals, in particular regularly and/or irregularly. Preferably, the component ID 6 redefined on occasion of an event, e.g., if a man-in-the-middle attack is determined. In preferred embodiments, the unique component ID 6 is derived from one or more characteristics of the component 1. In case the component 1, here component 1a, is a robot, the unique component ID 6 might be derived from performance characteristics, such as voltage or current curve during operation of the robot. Actually, each component usually has such characteristic performance curves as the voltage and current curve of a robot is totally different from the voltage and current curve of a control command component for example, so that the above performance characteristics might be used to process a unique component ID 6 for the respective component 1. Preferably, the component ID 6 derived from the characteristics is encrypted and processed by an encoding algorithm. Preferably, the encoding algorithm is accessible only by a PIN, personal identification code, for encoding or changing the component ID 6.

The unique component ID 6 is stored in each respective component 1 of the communications network 2. Further, as already described, the network component and functions diagram 5, which is in this example stored in each component 1 of the communications network 2, comprises the component IDs 6 of, preferably all, components 1 of the communications network 2.

Preferably, the network component and relation diagram 5 is updated, if a component 1 of the communications network 2 is newly integrated into the communications network 2. Preferably, the network component and relation diagram 5 is updated, if a component 1 of the communications network 2 is eliminated out of the communications network 2.

Furthermore, the network component and function diagram 5 comprises the functions of the components 1. The network component and function diagram 5 indicates for each component 1 identified by the component ID6 the respective function of the component 1. For example, the first component 1a in this embodiment is a robot for manufacture of cars. Therefore, the network and functions diagram 5 indicates that the function of component 1a is a robot for manufacture of cars. The second component 1b is a control command component. Therefore, the network component and function diagram 5 indicates that the second component 1b identified by the component ID 6 of the component 1b has the function of a control command component.

Continuing the example, the first component 1 a which received message 3 determines, if the message 3 has been sent to the right receiver. The destination ID of the message 3 corresponds to the component ID 6 of the first component 1 a. Thus, first component 1 a determines that the message 3 has not been falsely sent to the first component 1a. If in other situations, in contrast, the destination ID indicates a component 1 different from first component 1a as the receiver of the message 3, the first component 1a would know, that first component 1a is not the right receiver of the message 3 and thus message 3 is not a valid message for the first component 1a. However, here the destination ID of the message 3 indicates the first component 1a as the receiver of the message 3 so that the first component 1a is the correct receiver of the message 3.

Then, the first component 1a determines the message type of the message 3 based on the message type ID of the message 3. The first component 1a reads the ID 4 indicating the message type which is included in message 3 and accesses the network component and function diagram 5, where also the valid message types are indicated and identified by the respective message type ID. The message types might be e.g. control messages, command messages or information messages. The first component 1a compares the message type ID of the message 3 with the message types identified by their IDs in network component and function diagram 5 and determines that the message type of message 3 is a command message, here a switch-on message. This means, the message 3 sent to first component 1 a which is a robot is a command to switch-on the first component 1a, this means the robot which is first component 1a.

Further, the first component 1a determines, if the second component 1b is authorized to send a message of the indicated message type to the first component 1a as the receiver of the message 3. The first component 1a wants to know, if the second component 1b is authorized to send the message 3, here the control command, to first component 1a. The first component 1a accesses the network component and function diagram 5, where the valid combinations of sender components 1, receiver components 1 and message types are indicated, in other words which component 1 is authorized to send which type of message 3 to which component 1. Here, the network component and function diagram 5 includes the information that second component 1b is authorized to send a message 3 of message type command message, in particular switch-on command, to first component 1a. If in contrast in another situation, the first component 1a determines that the second component 1b is not authorized to send a message 3 of message type command message, then the message 3 is determined to be un-valid. For example, in another situation, the second component 1b would be a storage component which is authorized to send for example only messages for retrieving information about the status of the robot of first component 1a. Then a message 3 of message type control command sent by the second component 1b being a storage component would be determined by the first component 1a as an un-valid message 3.

The network component and function diagram 3 preferably includes information about each component 1 of the communication network 2 identified by the ID 6 of the component. The network component and function diagram 5 explicitly indicates that the first component 1a is a component authorized to receive a message of the type control command. In a preferred embodiment, alternatively or in addition, the network component and function diagram 5 comprises information about valid message types according to the function of a component, so that the determining, if a component 1 is authorized to send a message of a particular message type might be processed in a two step approach. Firstly, it is determined based on the ID 6 of a component 1, which is the function of the component 1. This is preferably done for the component 1 sending the message 3 and the component 1 receiving the message 3. Secondly, it is determined based on the function of the component 1 if the component 1 is authorized to sent or receive a message 3 of the specific message type. For example, the network component and function diagram 5 indicates based on the component ID 6 of the first component 1a that first component 1a is a robot. Then, the network component and function diagram 5 indicates in a general way, that robots are components 1 authorized to receive control commands such as switch-on commands. Therefore, as a conclusion, a determination is made, that the first component 1a due to being a robot is a component 1 authorized to receive a message 3 of type control command. Further, it is determined, if the second component 1b is authorized to send a message 3 of message type control command. The network component and function diagram 5 indicates that the second component 1b has the function of a control component. Then, the network component and function diagram 5 indicates explicitly that the second component 1b is authorized to send messages of the type control command. Alternatively or in addition, the network component and function diagram 5 might indicate in a general way that all control components are authorized to send messages 3 of the type control command. Consequently, from the network component and function diagram 5, it can be determined, that the second component 1b is authorized to send messages 3 of the type control command and the first component 1a is authorized to receive messages 3 of the type control command. Therefore, it can be determined that the second component 1b is authorized to send a message 3 of message type control command to the first component 1a. In a preferred embodiment, the network component and function diagram 5 might further specify that explicitly the second component 1b is authorized to send to the first component 1a a message 3 of the type control command. In other words, in a preferred embodiment, for each component 1 of the communications network 2, the network component and functions diagram 5 indicates explicitly all relations between all components 1 of the communications network in regard of authorized messages for each to each other component 1 of the communications network.

Here, the first component 1a determines that the second component 1b is authorized to send the message 3 of message type control command, more specifically switch-on message, to the first component 1a. Therefore, the message 3 is valid and the instruction, namely the control command switch-on, is executed. If, in contrast, the first component 1a determines that a message 3 sent to the first component 1a is not valid, the message is preferably discarded. Preferably, in the case of an un-valid massage 3, here if the first component 1a determines that the message 3 received by the first component 1a is not valid, an alarm is caused. Preferably, in the case of an un-valid massage 3, an update of the network component and relation diagram 5 is implemented. Preferably, in the case of an un-valid message 3, the component ID 6 of the components 1 of the communications network are changed and/or newly encrypted or encoded.

Figure 2 depicts a component 1, for example component 1a and component 1b, of a communications network 2. The component 1 comprises a validation unit 8. The validation unit 8 and therefore the component 1 comprising the validation unit 8 is adapted to receive a message 3 comprising one or more identification parameters 4 and to verify, if the message 3 is valid, based on the one or more identification parameters 4 of the message 3. The component 1 comprises a processor 7 included or adjacent to the validation unit 8. The processor 7 is adapted to process program code to implement the described method for providing communication.

The component 1, and in particular the validation unit 8, may be implemented as a single unit, a stand-alone device, or within a database, integrated in a computer and/or within a computer network. The component 1 and/or the validation unit 8 may be implemented through the use of hardware, software and/or hardware capable of executing software in association with appropriate software.

More specifically, the validation unit 8 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the validation unit 8 may be implemented as processing blocks in a software program. Such software may be employed in a digital signal processor, micro-controller, or general-purpose computer implemented as a single device or integrated in a computer network.

The validation unit 8 may comprise program code embodied in tangible media, such as magnetic recording media, optical recording media, solid state memory, floppy diskettes, CD-ROMs, hard drives, or any other machine-readable storage medium, wherein, when the program code is loaded into and executed in the validation unit 8, the validation unit 8 and therefore the component 1 comprising the validation unit becomes an apparatus used for practicing the invention.

The invention practically solves fundamental requirements of production, manufacturing, chemical companies in order to achieve stability under the use of production. Different from established security mechanisms the present invention uses information about the hardware infrastructure and setup to provide and improve communication, namely secure communication. The concept allows for realization of a robust and intelligent production, manufacturing or chemical area, in particular by means of a secure communication. Based on its decentralized character, it is highly scaleable avoiding huge a priori investments in large control centers.

## Claims

1. A method for providing communication between components (1) of a communication network (2), the method comprising:
- receiving, by a first component (1a) of the communications network (2), a message (3) comprising one or more identification parameters (4);
- verifying, by the first component (1a) of the communications network (2), if the message (3) is valid, based on the one or more identification parameters (4) of the message (3), wherein the verifying comprises:
- determining the validity of the message (3) based on a comparison between information derived out of a network component and function diagram (5) and one or more of the identification parameters (4) of the received message (3), wherein the network component and function diagram (5) comprises components (1) of the communications network (2), functions of these components (1) of the communications network (2) and relations between these components (1) of the communications network (2),
wherein the network component and function diagram (5) is stored in each of the components (1) of the communications network (2),
wherein the components (1) of the communications network (2) have a respective unique component identification, component ID (6), wherein the network component and function diagram (5) comprises the component IDs (6) of all components (1) of the communications network (2) and includes information about each component (1) of the communications network (2) identified by the component ID (6) of the component (1).

2. The method according to claim 1, wherein the network component and function diagram (5) is updated, if a component (1) of the communications network (2) is newly integrated into the communications network (2), and if a component (1) of the communications network (2) is eliminated out of the communications network (2).

3. The method according to claim 1 , wherein the one or more identification parameters (4) comprise one or more parameters selected from the group: a source ID indicating a second component (1b) of the communication network as a sender of the message, a destination ID and a message type ID.

4. The method according to claim 3, wherein the verifying comprises:
- determining the validity of the second component (1b) as the sender of the message (3) based on the source ID of the message (3) by accessing information of the network component and function diagram (5);
- determining the validity of the first component (1a) as a receiver of the message (3) based on the destination ID of the message (3) by accessing information of the network component and function diagram (5);
- determining the message type of the message (3) based on the message type ID of the message (3) by accessing information of the network component and function diagram (5); and
- determining, if the second component (1b) is authorized to sent a message of the indicated message type to the first component (1a) as the receiver of the message (3) by accessing information of the network component and function diagram (5).

5. The method according to claim 1, wherein the unique component ID (6) is derived from the hardware information of the component (1).

6. The method according to claim 1, wherein the unique component ID (6) is redefined in predetermined time intervals.

7. The method according to claim 1, wherein the unique component ID (6) is derived from one or more characteristics of the component (1).

8. The method according to claim 1, wherein the method further comprises:
- if the message (3) is valid, executing one or more instructions comprised by the message (3); and
- if the message (3) is not valid, discarding the message (3).

9. The method according to claim 1, wherein the components (1) of the communications network (2) are associated with and/or integrated within components of a production area, manufacturing area and/or chemical area.

10. The method according to claim 1, wherein the communication network (2) is based on IP, Internet Protocol, communication.

11. A computer program product adapted to execute the method according to claims 1 -10, when executed by a processor (7).

12. A component (1) of a communications network (2) comprising a validation unit (8) and a network component and function diagram (5), the validation unit (8) being adapted to receive a message (3) comprising one or more identification parameters (4) and to verify, if the message (3) is valid, based on the one or more identification parameters (4) of the message (3), wherein the validation unit (8) is adapted to determine the validity of the message (3) based on a comparison between information derived out of the network component and function diagram (5) and one or more of the identification parameters (4) of the received message (3), wherein the network component and function diagram (5) comprises components (1) of the communications network (2), functions of these components (1) of the communications network (2) and relations between these components (1) of the communications network (2), wherein the components (1) of the communications network (2) have a respective unique component identification, component ID (6), wherein the network component and function diagram (5) comprises the component IDs (6) of all components (1) of the communications network (2) and includes information about each component (1) of the communications network (2) identified by the component ID (6) of the component (1).

## Patentansprüche

1. Verfahren zum Bereitstellen von Kommunikation zwischen Komponenten (1) eines Kommunikationsnetzwerks (2), wobei das Verfahren Folgendes aufweist:
- Empfangen einer Nachricht (3) mit einem oder mehreren Identifikationsparametern (4) durch eine erste Komponente (1a) des Kommunikationsnetzwerks (2);
- Überprüfen der Gültigkeit der Nachricht (3) anhand des einen oder der mehreren Identifikationsparameter (4) der Nachricht (3) durch die erste Komponente (1a) des Kommunikationsnetzwerks (2), wobei das Überprüfen Folgendes aufweist:
- Bestimmen der Gültigkeit der Nachricht (3) basierend auf einem Vergleich zwischen Informationen, die aus einer Netzwerkkomponente und einem Funktionsschema (5) und einem oder mehreren der Identifikationsparameter (4) der empfangenen Nachricht (3) abgeleitet wurden,
wobei die Netzwerkkomponente und das Funktionsschema (5) Komponenten (1) des Kommunikationsnetzwerks (2), Funktionen dieser Komponenten (1) des Kommunikationsnetzwerks (2) und Beziehungen zwischen diesen Komponenten (1) des Kommunikationsnetzes (2) aufweisen,
wobei die Netzwerkkomponente und das Funktionsschema (5) in jeder der Komponenten (1) des Kommunikationsnetzwerks (2) gespeichert sind,
wobei die Komponenten (1) des Kommunikationsnetzwerks (2) eine jeweilige eindeutige Komponentenidentifikation, Komponenten-ID (6) aufweisen, wobei die Netzwerkkomponente und das Funktionsschema (5) die Komponenten-IDs (6) aller Komponenten (1) des Kommunikationsnetzwerks (2) aufweisen und Informationen über jede Komponente (1) des Kommunikationsnetzwerks (2) enthalten, die über die Komponenten-ID (6) der Komponente (1) identifiziert werden.

2. Verfahren nach Anspruch 1, wobei die Netzwerkkomponente und das Funktionsschema (5) aktualisiert werden, wenn eine Komponente (1) des Kommunikationsnetzwerks (2) neu in das Kommunikationsnetzwerk (2) integriert wird, und wenn eine Komponente (1) des Kommunikationsnetzes (2) aus dem Kommunikationsnetzwerk (2) entfernt wird.

3. Verfahren nach Anspruch 1, wobei der eine oder die mehreren Identifikationsparameter (4) einen oder mehrere Parameter aufweisen, die aus der Gruppe mit folgenden Elementen ausgewählt sind: eine Quellen-ID, die eine zweite Komponente (1b) des Kommunikationsnetzwerks als Absender der Nachricht angibt, eine Ziel-ID und eine Nachrichtentyp-ID.

4. Verfahren nach Anspruch 3, wobei das Überprüfen darüber hinaus Folgendes aufweist:
- Bestimmen der Gültigkeit der zweiten Komponente (1b) als Absender der Nachricht (3) basierend auf der Quellen-ID der Nachricht (3) durch Zugreifen auf Informationen der Netzwerkkomponente und des Funktionsschemas (5);
- Bestimmen der Gültigkeit der ersten Komponente (1a) als Empfänger der Nachricht (3) basierend auf der Ziel-ID der Nachricht (3) durch Zugreifen auf Informationen der Netzwerkkomponente und des Funktionsschemas (5);
- Bestimmen des Nachrichtentyps der Nachricht (3) basierend auf der Nachrichtentyp-ID der Nachricht (3) durch Zugreifen auf Informationen der Netzwerkkomponente und des Funktionsschemas (5); und
- Bestimmen, ob die zweite Komponente (1b) berechtigt ist, eine Nachricht des angegebenen Nachrichtentyps an die erste Komponente (1a) als Empfänger der Nachricht (3) zu senden, und zwar durch Zugreifen auf Informationen der Netzwerkkomponente und des Funktionsschemas (5).

5. Verfahren nach Anspruch 1, wobei die eindeutige Komponenten-ID (6) aus den Hardware-Informationen der Komponente (1) abgeleitet wird.

6. Verfahren nach Anspruch 1, wobei die eindeutige Komponenten-ID (6) in vorbestimmten Zeitintervallen neu definiert wird.

7. Verfahren nach Anspruch 1, wobei die eindeutige Komponenten-ID (6) aus der einen oder den mehreren Eigenschaften der Komponente (1) abgeleitet wird.

8. Verfahren nach Anspruch 1, wobei das Verfahren darüber hinaus Folgendes aufweist:
- wenn die Nachricht (3) gültig ist, Ausführen einer oder mehrerer Anweisungen, die in der Nachricht (3) enthalten sind; und
- wenn die Nachricht (3) nicht gültig ist, Verwerfen der Nachricht (3).

9. Verfahren nach Anspruch 1, wobei die Komponenten (1) des Kommunikationsnetzes (2) Komponenten eines Produktionsbereichs, Fertigungsbereichs und/oder Chemiebereichs zugeordnet und/oder in diese integriert sind.

10. Verfahren nach Anspruch 1, wobei das Kommunikationsnetzwerk (2) auf IP-Kommunikation, "Internet Protocol"-Kommunikation, basiert.

11. Computerprogrammprodukt, das dafür ausgelegt ist, das Verfahren nach den Ansprüchen 1 - 10 auszuführen, wenn es von einem Prozessor (7) ausgeführt wird.

12. Komponente (1) eines Kommunikationsnetzwerks (2) mit einer Validierungseinheit (8) und einer Netzwerkkomponente und einem Funktionsschema (5), wobei die Validierungseinheit (8) dafür ausgelegt ist, eine Nachricht (3) mit einem oder mehreren Identifikationsparametern (4) zu empfangen und anhand des einen oder der mehreren Identifikationsparameter (4) der Nachricht (3) zu überprüfen, ob die Nachricht (3) gültig ist, wobei die Validierungseinheit (8) dafür ausgelegt ist, die Gültigkeit der Nachricht (3) basierend auf einem Vergleich zwischen Informationen, die aus der Netzwerckomponente und dem Funktionsschema (5) und einem oder mehreren der Identifikationsparameter (4) der empfangenen Nachricht (3) abgeleitet wurden, zu bestimmen, wobei die Netzwerkkomponente und das Funktionsschema (5) Komponenten (1) des Kommunikationsnetzwerks (2), Funktionen dieser Komponenten (1) des Kommunikationsnetzwerks (2) und Beziehungen zwischen diesen Komponenten (1) des Kommunikationsnetzes (2) aufweisen, wobei die Komponenten (1) des Kommunikationsnetzwerks (2) eine jeweilige eindeutige Komponentenidentifikation, Komponenten-ID (6) aufweisen, wobei die Netzwerkkomponente und das Funktionsschema (5) die Komponenten-IDs (6) aller Komponenten (1) des Kommunikationsnetzwerks (2) aufweisen und Informationen über jede Komponente (1) des Kommunikationsnetzwerks (2) enthalten, die über die Komponenten-ID (6) der Komponente (1) identifiziert werden.

## Revendications

1. Procédé pour fournir une communication entre des composants (1) d'un réseau de communication (2), le procédé comprenant :
- la réception, par un premier composant (la) du réseau de communication (2), d'un message (3) comprenant un ou plusieurs paramètres d'identification (4) ;
- la vérification, par le premier composant (la) du réseau de communication (2), si le message (3) est valide, en se basant sur le ou les paramètres d'identification (4) du message (3), dans lequel la vérification comprend :
- la détermination de la validité du message (3) en se basant sur une comparaison entre des informations dérivées d'un diagramme de composants et de fonctions de réseau (5) et un ou plusieurs des paramètres d'identification (4) du message reçu (3), dans lequel le diagramme de composants et de fonctions de réseau (5) comporte des composants (1) du réseau de communication (2), des fonctions de ces composants (1) du réseau de communication (2) et des relations entre ces composants (1) du réseau de communication (2), dans lequel le diagramme de composants et de fonctions de réseau (5) est stocké dans chacun des composants (1) du réseau de communication (2),
dans lequel les composants (1) du réseau de communication (2) possèdent une identification de composant, ID de composant (6), unique respective, dans lequel le diagramme de composants et de fonctions de réseau (5) comporte les ID de composant (6) de tous les composants (1) du réseau de communication (2) et comporte des informations concernant chaque composant (1) du réseau de communication (2) identifié par l'ID de composant (6) du composant (1).

2. Procédé selon la revendication 1, dans lequel le diagramme de composants et de fonctions de réseau (5) est mis à jour si un composant (1) du réseau de communication (2) est récemment intégré dans le réseau de communication (2) et si un composant (1) du réseau de communication (2) est éliminé du réseau de communication (2).

3. Procédé selon la revendication 1, dans lequel le ou les paramètres d'identification (4) comprennent un ou plusieurs paramètres sélectionnés dans le groupe : une ID de source indiquant un second composant (1b) du réseau de communication en tant qu'expéditeur du message, une ID de destination et une ID de type de message.

4. Procédé selon la revendication 3, dans lequel la vérification comprend :
- la détermination de la validité du second composant (1b) en tant que l'expéditeur du message (3) en se basant sur l'ID de source du message (3) en accédant à des informations du diagramme de composants et de fonctions de réseau (5) ;
- la détermination de la validité du premier composant (la) en tant que destinataire du message (3) en se basant sur l'ID de destination du message (3) en accédant à des informations du diagramme de composants et de fonctions de réseau (5) ;
- la détermination du type de message du message (3) en se basant sur l'ID de type du message (3) en accédant à des informations du diagramme de composants et de fonctions de réseau (5) ; et
- la détermination, si le second composant (1b) est autorisé à envoyer un message du type de message indiqué au premier composant (la) en tant que le destinataire du message (3) en accédant à des informations du diagramme de composants et de fonctions de réseau (5).

5. Procédé selon la revendication 1, dans lequel l'ID de composant (6) unique est dérivée des informations matérielles du composant (1).

6. Procédé selon la revendication 1, dans lequel l'ID de composant (6) unique est redéfinie dans des intervalles de temps prédéterminés.

7. Procédé selon la revendication 1, dans lequel l'ID de composant (6) unique est dérivée d'une ou de plusieurs caractéristiques du composant (1).

8. Procédé selon la revendication 1, le procédé comprenant en outre :
- si le message (3) est valide, l'exécution d'une ou de plusieurs instructions incluses par le message (3) ; et
- si le message (3) n'est pas valide, la suppression du message (3).

9. Procédé selon la revendication 1, dans lequel les composants (1) du réseau de communication (2) sont associés à des composants et/ou intégrés dans des composants d'une zone de production, d'une zone de fabrication et/ou d'une zone chimique.

10. Procédé selon la revendication 1, dans lequel le réseau de communication (2) est basé sur une communication de protocole Internet, IP.

11. Produit programme informatique conçu pour exécuter le procédé selon les revendications 1 à 10 lorsqu'il est exécuté par un ordinateur.

12. Composant (1) d'un réseau de communication (2) comprenant une unité de validation (8) et un diagramme de composants et de fonctions de réseau (5), l'unité de validation (8) étant conçue pour recevoir un message (3) comprenant un ou plusieurs paramètres d'identification (4) et pour vérifier si le message (3) est valide, en se basant sur le ou les paramètres d'identification (4) du message (3), dans lequel l'unité de validation (8) est conçue pour déterminer la validité du message (3) en se basant sur une comparaison entre des informations dérivées du diagramme de composants et de fonctions de réseau (5) et un ou plusieurs des paramètres d'identification (4) du message reçu (3), dans lequel le diagramme de composants et de fonctions de réseau (5) comporte des composants (1) du réseau de communication (2), des fonctions de ces composants (1) du réseau de communication (2) et des relations entre ces composants (1) du réseau de communication (2), dans lequel les composants (1) du réseau de communication (2) possèdent une identification de composant, ID de composant (6), unique respective, dans lequel le diagramme de composants et de fonctions de réseau (5) comporte les ID de composant (6) de tous les composants (1) du réseau de communication (2) et comporte des informations concernant chaque composant (1) du réseau de communication (2) identifié par l'ID de composant (6) du composant (1).
